Europäisches Patentamt

European Patent Office

Office européen des brevets

(19)

(11) Veröffentlichungsnummer: **0 039 016**
**B1**

(12) **EUROPÄISCHE PATENTSCHRIFT**

(45) Veröffentlichungstag der Patentschrift:
12.09.84

(51) Int. Cl.³: **G 21 C 1/06**

(21) Anmeldenummer: **81102959.4**

(22) Anmeldetag: **16.04.81**

(54) **Hochtemperaturreaktor in Modul-Bauweise.**

(30) Priorität: **29.04.80 DE 3016402**

(43) Veröffentlichungstag der Anmeldung:
**04.11.81 Patentblatt 81/44**

(45) Bekanntmachung des Hinweises auf die Patenterteilung:
**12.09.84 Patentblatt 84/37**

(84) Benannte Vertragsstaaten:
**BE CH DE FR GB LI NL SE**

(56) Entgegenhaltungen:
DE - B - 1 148 827
DE - B - 1 257 297
FR - A - 2 114 258
FR - A - 2 132 572
FR - A - 2 292 314
GB - A - 821 607
GB - A - 1 036 935

ENERGIE NUCLEAIRE, Band 9, Nr. 6, Oktober 1967,
Seiten 358-372, Rueil - Malmaison, Fr. L. VALETTE et al.:
" Les réacteurs à haute température en Europe"
THE JOURNAL OF THE BRITISH NUCLEAR ENERGY
SOCIETY, Band 5, Nr. 3, Juli 1966, Seiten 319-331,
London, G.B. H.W. MÜLLER et al.: "The AVR pebble bed
reactor"

(73) Patentinhaber: **GHT Gesellschaft für
Hochtemperaturreaktor-Technik mbH,
Friedrich-Ebert-Strasse,
D-5060 Bergisch-Gladbach 1 (DE)**

(72) Erfinder: **Müller-Frank, Ulrich, Dr., Otto-Hahn-Strasse 5,
D-5060 Bergisch Gladbach 1 (DE)**
Erfinder: **Reutler, Herbert, Dr., Weissenburgstrasse 33,
D-5000 Köln 1 (DE)**
Erfinder: **Ullrich, Manfred, Kippekausen 115,
D-5060 Bergisch Gladbach 3 (DE)**

(74) Vertreter: **Mehl, Ernst, Dipl.-Ing. et al, Postfach 22 01 76,
D-8000 München 22 (DE)**

## Beschreibung

Die Erfindung betrifft einen gasgekühlten Hochtemperaturreaktor, insbesondere mit einer Schüttung kugelförmiger Brennelemente, in einem Reaktorbehälter bestehend aus einer metallischen Grundplatte und einem damit verbundenen Blechmantel innerhalb dessen ein Boden, ein Seitenreflektor und ein Deckenreflektor aus Kohle- und/oder Graphitsteinen angeordnet sind; der Reaktorbehälter befindet sich während des Betriebes in einer Kaverne eines Sicherheitsbehälters. Dieser Reaktor soll als Leistungsreaktor entweder zur Stromerzeugung beispielsweise über einen Dampfprozess oder zur nuklearen Kohlevergasung dienen. Leistungsreaktoren dieser Art sind in Deutschland der AVR und THTR, beschrieben in der deutschen Zeitschrift «Atomwirtschaft» vom Mai 1966 und vom Mai 1971 in mehreren ausführlichen Aufsätzen. In den USA sei als Beispiel der Reaktor Fort Saint Vrain genannt, der ebenfalls in mehreren Veröffentlichungen beschrieben wurde. Der AVR hat seit seiner Fertigstellung im Jahre 1967 bis heute mit hoher Verfügbarkeit Leistung abgegeben. Seine thermische Leistung von 46 MW ist aber für einen Leistungsreaktor zu gering. Bei den folgenden Projekten hat man sich bemüht, die thermische Leistung eines Kugelhaufenreaktors im wesentlichen durch Vergrösserung des Durchmessers zu erhöhen. Dabei ergaben sich mehrere Probleme. Kugelhaufenreaktoren mit einem Kerndurchmesser von beispielsweise 6 m brauchen zur sicheren Abschaltung Absorber, die unmittelbar in die Kugelschüttung eindringen. In entsprechenden Absorberstäben und ihren Antrieben sowie den die Schüttung umgebenden Strukturen treten dabei erhebliche Kräfte auf. Ausserdem sind die Absorberstäbe selbst und bei einem Störfall auch ihre Antriebe durch die von einem Hochtemperaturreaktor ausgehenden hohen Temperaturen beansprucht. Weiterhin erfordern Hochtemperaturreaktoren von grossem Durchmesser zahlreiche redundante und möglichst auch diversitäre aktive Wärmeabfuhrsysteme, die zwangsläufig metallische Bauteile enthalten und daher ebenfalls im Störfall durch hohe Temperaturen gefährdet sind. Ausserdem sind die aus Graphit bestehenden Seitenwände eines gasgekühlten Hochtemperaturreaktors im Bereich eines hohen Neutronenflusses stark beansprucht und müssen nach längerer Betriebszeit inspiziert, gegebenenfalls ausgewechselt werden. Der Vorteil der bisher geplanten Hochtemperaturreaktoren von grossem Durchmesser, nämlich ein bezüglich der Brennstoffzykluskosten optimaler Kern, wird bei näherer Betrachtung durch aufwendige Regel- und Instrumentierungssysteme, redundante und diversitäre Abschalteinrichtungen und Nachwärmeabfuhrkühlketten gemindert. Daher geht die vorliegende Erfindung von dem Gedanken aus, dass die bisher geplanten grossen Leistungen auch durch Aufstellung mehrerer parallel geschalteter kleinerer Einheiten erreicht werden können. Dabei ergeben sich auch Vorteile bei der Fertigung von Reaktorbauteilen in Serien sowie durch die Erhöhung der Vergfügbarkeit, da bei mehreren parallel geschalteten Kernreaktoren die Abschaltung eines einzelnen Reaktors die Gesamtleistung der Anlage nur zu einem Bruchteil verringert. Ausserdem ist die für Inspektion und Wartung eines kleinen Reaktors notwendige Investition geringer als bei einem grossen Reaktor und verteilt sich zudem auf mehrere Einheiten. Aus diesen Gründen erscheint es zweckmässig, einen Hochtemperaturreaktor so zu gestalten, dass er im ganzen ausgewechselt werden kann. Hierdurch unterscheidet sich die hier vorgeschlagene Konstruktion vorteilhaft von der aus der GB-A-821 607 bekannten, bei der ein besonderer, innerhalb des Reaktorbehälters angeordneter Kernbehälter aus diesem entfernt werden kann, der Reflektor und die ebenfalls zum Betrieb erforderlichen Absorberstäbe jedoch darin verbleiben bzw. getrennt ausgebaut werden müssen.

Aufgabe der vorliegenden Erfindung ist also ein gasgekühlter Hochtemperaturreaktor in einer gas- und druckdicht verschliessbaren Kaverne, dessen Behälter, bestehend aus Grundplatte, Reaktorboden, Seitenreflektor und Deckenreflektor im Ganzen an einem Hebezeug befestigt und ausgewechselt werden kann.

Die Lösung dieser Aufgabe erfolgt dadurch, dass der Reaktorbehälter in der Kaverne axial verschiebbar ist; dass die Kaverne an ihrer Oberseite mit einem heausnehmbaren Deckel versehen ist; dass der Reaktorbehälter mit Mitteln versehbar ist, die mit einem Hebezeug verbindbar sind; dass die Zufuhr des Kühlgases in die Brennelementschüttung aus der Kaverne über Bohrungen in der Grundplatte und diese fortsetzende Kanäle im Seitenreflektor und einen Sammelraum erfolgt; dass die Abfuhr des erhitzten Gases aus der Brennelementschüttung in an sich bekannter Weise über Bohrungen im Boden und mindestens eine mit einer Heissgasleitung verbindbare Öffnung in der Grundplatte erfolgt und dass die Verbindung der Grundplatte mit der Heissgasleitung durch Axialbewegung des Reaktorbehälters lösbar ist. Der Reaktorbehälter ist als Ganzes von seiner Verankerung in der Kaverne lösbar und kann nach Öffnen derselben aus ihr herausgehoben werden; zuvor ist die Brennelementfüllung aus dem Reaktorbehälter abgelassen worden. Das kalte Kühlgas tritt in den Kavernenraum unterhalb des Reaktorbehälters ein, strömt von dort durch Bohrungen in der Grundplatte in Kanäle, die im Seiten- und Deckenreflektor des Reaktors angelegt sind, nach oben in einen Sammelraum und daraufhin von oben nach unten durch den Reaktorkern, wo es aufgeheizt wird. Dann wid es in innenisolierten Rohren durch die Grundplatte hindurch in einen Gassammelraum geführt und von hier zu einer Wärmesenke. Da die Öffnung für den Ein- und Austritt des Kühlgases in bzw. aus dem Reaktorbehälter nur in der Grundplatte angeordnet sind, bleibt der Mantel völlig frei von Durchdringungen und Anschlüssen, die vor einem Herausheben des Reaktorbehälters aus dem Sicherheitsbehälter getrennt und beiseitegeräumt werden müssten.

Da die Führung des Heissgaskanals unterhalb der Grundplatte axial, d.h. gleich der Bewegungsrichtung des Reaktorbehälters beim Herausheben ist, kann die Verbindung von Grundplatte und Heissgasleitung als Steckverbindung gestaltet werden, deren Lösen durch einfaches Ziehen erfolgt, ohne die Notwendigkeit vorheriger Manipulationen mit fernbedienten Werkzeugen. Die Mittel, an denen das zum Herausheben des Reaktorbehälters verwendete Hebelzeug an diesem angreift brauchen nicht ständig vorhanden zu sein, sondern können erst bei Bedarf angebracht werden. Die sich zunächst anbietende Möglichkeit, diese Mittel etwa in Gestalt von Ösen oder eines Flansches am oberen Ende des Reaktorbehälters anzubringen bedingt, dass der Blechmantel das gesamte Gewicht zu tragen in der Lage sein muss. Es ist daher günstiger, das Hebezeug an der Grundplatte angreifen zu lassen, die ohnehin so bemessen werden muss, dass sie das Gesamtgewicht tragen kann. Werden die genannten Mittel am Aussenrand der Grundplatte angebracht, so führt dies zu einem vergrösserten Durchmesser und damit zu einer unnötigen Vergrösserung der Reaktorkaverne. Im zweiten Anspruch wird daher eine Lösung vorgeschlagen, bei der die Verbindung der Grundplatte zu Hebezug innerhalb der Kontur des Reaktorbehälters angeordnet werden kann. Die Zugstangen können dabei in der Grundplatte verriegelt oder verschraubt werden.

Im dritten Anspruch wird vorgeschlagen, diese Kanäle während des Reaktorbetriebes dazu zu verwenden, das unten in den Reaktorbehälter eintretende kühle Gas nach oben zu führen und in den Raum oberhalb der Brennelementschüttung eintreten zu lassen. Dadurch wird die bei Reaktoren dieser Art erwünschte Strömungsrichtung des Kühlmittels durch den Kern von oben nach unten erreicht. Ein weiterer Vorteil ist, dass die Seitenwand des Reaktorbehälters gekühlt wird: die Lebensdauer der als Seitenreflektor dienenden Graphitblöcke und der sie umgebenden äusseren Schicht von Kohlesteinblöcken wird erhöht und die thermische Belastung des Blechmantels wird herabgesetzt. Ein gekühlter Reflektor ist darüberhinaus in der Lage, bei einer Störung in der Kühlgasversorgung nach Abschaltung des Reaktors einen grösseren Anteil der in der Brennelementschüttung freigesetzten Nachwärme zu speichern.

Bei einem Reaktor der beschriebenen Art mit einem Kerndurchmesser von etwa 3 m genügen zur Regelung und Abschaltung Absorberelemente, die in zu diesem Zweck im Reflektor angelegten Kanälen auf und abgefahren werden. Da vor dem Ausbau des Reaktorbehälters die Brennelemente aus diesem entfernt worden sind, können auch die Absorberstäbe ausgebaut werden und deren Kanäle alternativ zum Vorschlag des Anspruchs 2 für die Unterbringung der zur Grundplatte hinabreichenden Zugstangen benutzt werden.

Im fünften Anspruch wird eine Alternative der Anordnung des Reaktorbehälters zu den Wärmeverbrauchern (z.B. Wärmetauscher zur Erhitzung eines Sekundärkühlmittels) angegeben, wie sie ähnlich auch für die bislang in der Planung bevorzugten Reaktoren sehr viel grösserer Leistung vorgesehen worden ist. Die zweite Kaverne ist deshalb für sich zugänglich, was für Wartungs- und Reparaturarbeiten gewisse Vorteile bietet, bedingt jedoch einen erhöhten Durchmesser des gesamten Sicherheitsbehälters sowie erhöhten Aufwand für die Heissgasleitung.

Die im sechsten Anspruch alternativ hierzu angegebene Möglichkeit, Wärmetauscher unterhalb des Reaktorbehälters in derselben Kaverne anzuordnen vereinfacht die Gasführung und führt zu einer platzsparenden Bauweise bei allerdings verschlechterter Zugänglichkeit der Wärmetauscher. Reaktorbehälter und Wärmetauscher können dann übereinander in einem stählernen Druckbehälter untergebracht werden, wie er für die Verwendung in Druckwasserreaktoren bekannt und erprobt ist.

Die im siebten Anspruch vorgeschlagenen besonderen Leitvorrichtungen zur Führung des kühlen Gases dienen einer verbesserten Kühlung der Grundplatte, des Mantels der innenisolierten Heissgasleitungen, und zu einer gezielten Zufuhr des Kühlgases an die in der Grundplatte angeordneten Eintrittsöffnungen.

Zwei Ausführungsbeispiele der Erfindung sind in der Zeichnung dargestellt, und zwar zeigt

Figur 1 einen Längsaxialschnitt durch eine erste Ausführungsform im Betriebszustand
Figur 2 einen Längsaxialschnitt durch dieselbe Ausführungsform im Montagezustand und
Figur 3 einen Längsaxialschnitt durch eine zweite Ausführungsform.

In einem Sicherheitsbehälter 1 (hier aus Beton) ist eine erste Kaverne 2 angelegt, in der auf einem Tragring 3 ruhend ein Reaktorbehälter 4 angeordnet ist. Dieser besteht im Grundsatz aus einer metallischen Grundplatte 5, einem ebenfalls metallischen Mantel 6, einem Boden 7, einem Seitenreflektor 8 und einem Deckenreflektor 9, welch letztere drei Teile nur aus Graphitblöcken mit einer äusseren Lage von Kohlesteinen aufgebaut sind; durch den Verzicht auf metallische Teile sind sie in der Lage, etwa bei Störfällen auftretenden erhöhten Temperaturen zu widerstehen. Der Reaktorbehälter 4 enthält eine Schüttung 10 aus kugelförmigen Brennelementen, deren Reaktivität mit Hilfe von Steuerstäben 11 geregelt wird, die in zu diesem Zweck im Seitenreflektor 8 angelegten Kanälen mit Hilfe von hier nicht dargestellten Antriebsvorrichtungen auf- und abgefahren werden können. Die Antriebsvorrichtungen sind über einem Deckel 13 angeordnet, der die erste Kaverne 2 nach oben abschliesst. Verbrauchte Brennelemente werden über ein Rohr 14 abgezogen. Auf die Darstellung einer entsprechenden Zugabevorrichtung für frische Brennelemente am oberen Ende des Reaktorbehälters 4 wurde hier der Übersichtlichkeit halber verzichtet. In einer zweiten Kaverne 15, die ebenfalls mit einem Deckel 16 verschlossen ist, ist ein Dampferzeuger 17 angeordnet, in dem das in der Brennelementschüttung 10 aufgeheizte Kühlgas seine Wärme abgibt. Dieser ist von konventioneller Bauart mit einem Wassereintritt 18, einem Dampfaustritt 19 und zwischen diesen angeordneten Rohrbündeln 20 und braucht nicht weiter beschrieben zu werden. Der Umlauf des Kühlgases wird durch ein unterhalb des Dampferzeugers 17 angeordnetes Gebläse 21 aufrechterhalten. Besondere Beachtung verdient dabei die Gasführung in der ersten Kaverne 2. Das durch einen Verbindungskanal aus der zweiten Kaverne 15 geleitete Kühlgas wird durch Leitvorrichtungen 23 gezielt an die Grundplatte 5 geführt, so dass diese keiner für metallische Werkstoffe unzulässigen Temperatur ausgesetzt wird. In der Grundplatte 5 sind Öffnungen angelegt, die mit weiteren, im Seitenreflektor 8 angeordneten Kühlkanälen 24 fluchten. In diesen Kühlkanälen, die für eine Begrenzung der Temperatur im Seitenreflektor sorgen, wird das Gas in einem oberhalb des Deckenreflektors angeordneten Sammelraum 25 geleitet, von wo aus es abwärts durch die Brennelementschüttung 10 strömt. In dieser aufgeheizt verlässt es den Reaktorbehälter 4 durch Öffnungen im Boden 7 und sammelt sich in einem Sammelraum 26, an den eine zum Dampferzeuger 17 führende Heissgasleitung 27 angeschlossen ist. Die Verbindung zwischen Sammelraum 26 und Heissgasleitung 27 kann durch fernbediente Werkzeuge gelöst werden. Der Kühlung des Mantels 6 im Normalbetrieb und zur Nachwärmeabfuhr bei abgeschaltetem Reaktor und stehendem Gebläse 21 dienen mehrere über den Umfang veteilte U-förmige (hier nur in der Seitenansicht dargestellte) Kühlleitungen 28. Grundplatte 5 und Mantel 6 sind fest miteinander verbunden und z.B. mittels Schrauben am Tragring 3 befestigt, die ebenfalls mit Hilfe von fernbedienten Werkzeugen lösbar sind. Die Kühlkanäle 24 sind an ihrem oberen Ende mit Stopfen 30 verschlossen.

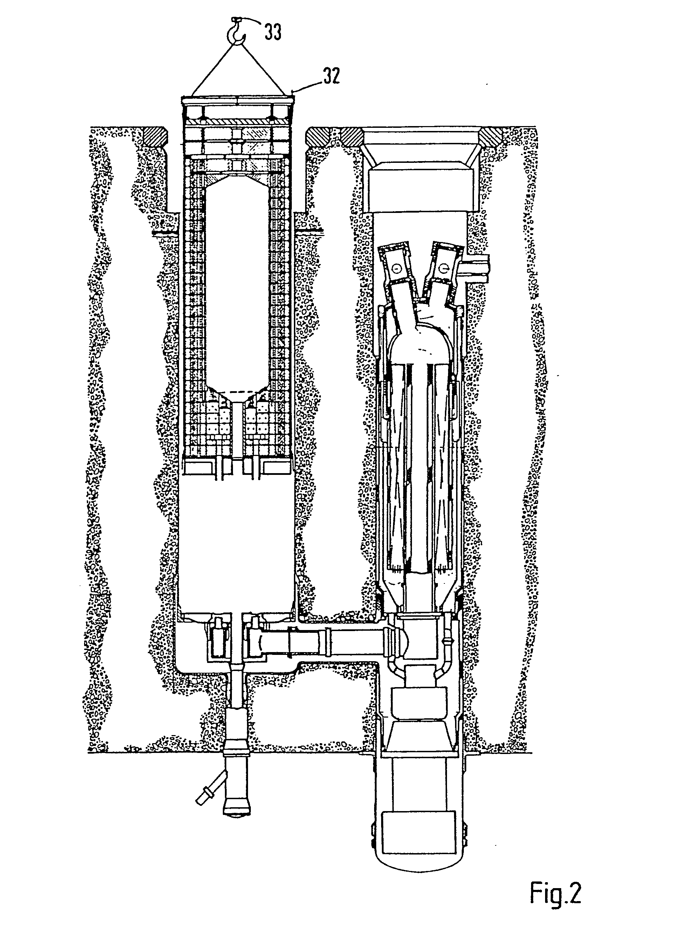

Die Figur 2 zeigt den Zustand der Anlage, nachdem der Reaktor mit Hilfe der Steuerstäbe 11 abgeschaltet und die Brennelementfüllung 10 nach entsprechendem Abklingen durch das Abzugsrohr 14 entfernt wurde. Danach wurde der Deckel 13 mitsamt den in ihm angeordneten Steuerstabantrieben entfernt. Die Kühlleitungen 28 wurden an geeigneter, hier nichtdargestellter Stelle getrennt. Gleichfalls wurden die Stopfen 30 entfernt, und in die Kühlkanäle 24 an einer Traverse 32 befestigte Zugstangen eingeführt, die an ihrem unteren Ende in der Grundplatte 5 verriegelt wurden. Mittels eines hier nur angedeuteten Hebezeuges 33 kann nunmehr der gesamte Reaktorbehälter 4 aus der Kaverne 2 zu Reparatur- und Wartungszwecken herausgehoben werden, wobei gleichzeitig die Steckverbindung zwischen der Grundplatte 5 bzw. ihren Stutzen und dem Sammelraum 26 aufgehoben wird.

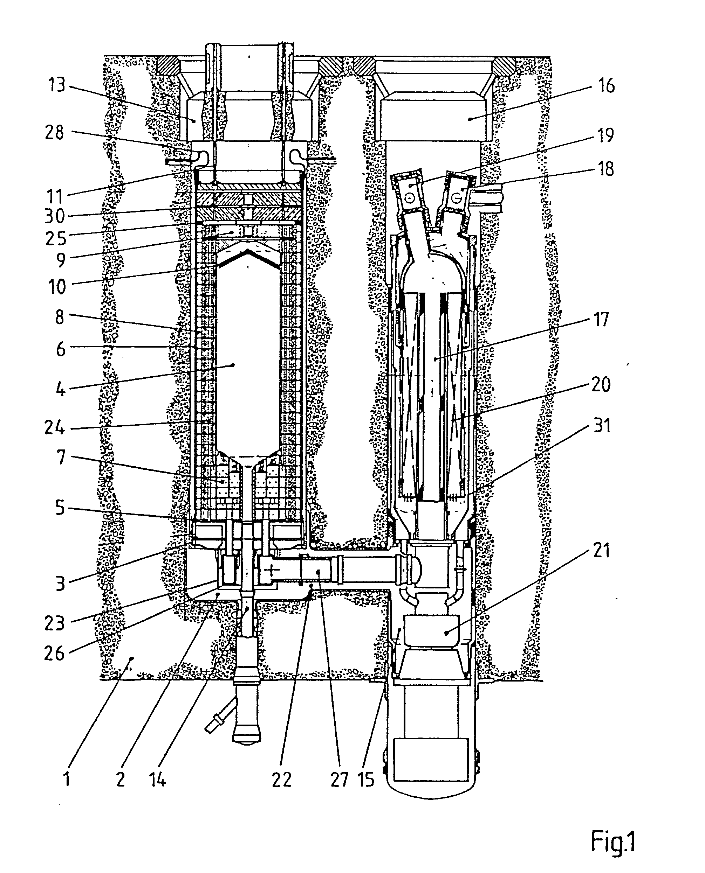

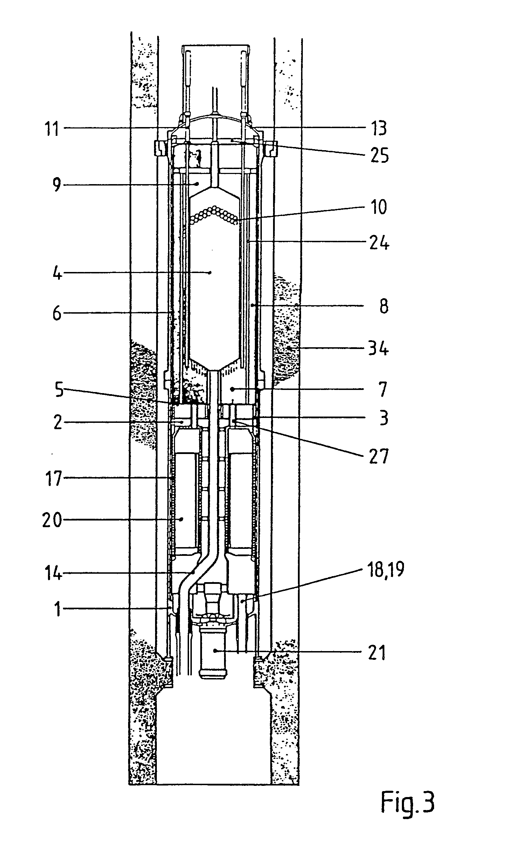

Die Figur 3 zeigt eine alternative Konstruktion, wobei die Teile, deren Funktion mit denen in den Figuren 1 und 2 dargestellten übereinstimmt, dieselben Bezugszeichen erhalten haben. Als Sicherheitsbehälter 1 dient hier ein Stahldruckbehälter, wie er in gleicher Weise für leichtwassergekühlte Kernreaktoren verwendet wird. Zur Strahlenabschirmung ist hier ein zusätzlicher Schild 34 aus Beton erforderlich. Reaktor und Wärmetauscher sind übereinander angeordnet, so dass auf eine zweite Kaverne verzichtet werden kann. Das Heissgas tritt durch hier nur ganz kurze Leitungen 27 in den Wärmetauscher 17 ein, der das Brennelementabzugsrohr 14 ringförmig umgibt. Zwischen beiden ist noch ein Ringraum vorhanden, in dem das abgekühlte Gas in den hier die Funktion der Kaverne 2 ausfüllenden Raum strömt, von wo aus es den weiter oben beschriebenen Weg durch den Reaktor nimmt. Auch hier sind die Verbindungen der Heissgasleitung 27 zum Wärmetauscher 17 als Streckverbindung ausgeführt. Nach Lösen des Deckels 13 kann der abgeschaltete und entleerte Reaktor in gleicher Weise wie der weiter oben beschriebene aus dem Sicherheitsbehälter 1 herausgehoben werden.

**Patentansprüche**

1. Gasgekühlter Hochtemperaturreaktor, insbesondere mit einer Schüttung (10) kugelförmiger Brennelemente, in einem Reaktorbehälter (4) bestehend aus einer metallischen Grundplatte (5) und einem damit verbundenen Blechmantel (6), innerhalb dessen ein Boden (7), ein Seitenreflektor (8) und ein Deckenreflektor (9) aus Kohle- und/oder Graphitsteinen angeordnet sind; der Reaktorbehäler befindet sich während des Betriebes in einer Kaverne (2) eines Sicherheitsbehälters (1) und ist dadurch gekennzeichnet, dass

    a. der Reaktorbehälter (4) in der Kaverne (2) axial verschiebbar ist;

    b. die Kaverne (2) an ihrer Oberseite mit einem herausnehmbaren Deckel (13) versehen ist;

    c. der Reaktorbehälter (4) mit Mitteln (32) versehbar ist, die mit einem Hebezeug (33) verbindbar sind;

    d. die Zufuhr des Kühlgases in die Brennelementschüttung (10) aus der Kaverne (2) über Bohrungen in der Grundplatte (5) und diese fortsetzende Kanäle (24) im Seitenreflektor (8) und einen Sammelraum (25) erfolgt;

    e. die Abfuhr des erhitzten Gases aus der Brennelementschüttung (10) in an sich bekannter Weise über Bohrungen im Boden (7) und mindestens eine mit einer Heissgasleitung (26, 27) verbindbare Öffnung in der Grundplatte (5) erfolgt;

    f. die Verbindung der Grundplatte (5) mit der Heissgasleitung (26, 27) durch Axialbewegung des Reaktorbehälters (4) lösbar ist.

2. Reaktor nach Anspruch 1, dadurch gekennzeichnet, dass die mit dem Hebezeug (33) verbindbaren Mittel aus Zugstangen (32) bestehen, die in den Kanälen (24) im Seitenreflektor (8) geführt und an der Grundplatte (5) befestigbar sind.

3. Reaktor nach Anspruch 2, dadurch gekennzeichnet, dass

a. während des Reaktorbetriebes die Kanäle (24) an ihrem oberen Ende mit Stopfen (30) verschlossen sind;

b. die Kanäle (24) mit dem Raum (25) oberhalb der Brennelementschüttung (10) verbunden sind.

4. Reaktor nach Anspruch 2, dadurch gekennzeichnet, dass während des Reaktorbetriebes in weiteren Kanälen im Seitenreflektor (8) Absorberelemente (11) zur Regelung des Reaktors verfahrbar sind.

5. Reaktor nach Anspruch 1, dadurch gekennzeichnet, dass die Heissgasleitung (26, 27) in eine zweite Kaverne (15) führt, in der Wärmeverbraucher (17) aufgestellt sind.

6. Reaktor nach Anspruch 1, dadurch gekennzeichnet, dass die Heissgasleitung (26, 27) zu Wärmeverbrauchern (17) führt, die in der gleichen Kaverne (2) unterhalb des Reaktorbehälters (4) angeordnet sind.

7. Reaktor nach Anspruch 1, dadurch gekennzeichnet, dass Leitvorrichtungen (23) zur Führung des kühlen Gases aus der Kaverne (2) an die Grundplatte (5) und an die Heissgasleitung (26, 27) vorhanden sind.

## Claims

1. A gas-cooled high temperature nuclear reactor, in particular one having a charge (10) of spherical fuel elements, in a reactor container (4) consisting of a metal base plate (5) and a sheet-metal jacket (6) connected thereto, within which are arranged a base (7), a lateral reflector (8) and a top reflector (9), made of carbon- and/or graphite bricks; the reactor container being housed during operation in a cavity (2) of a safety container (1) and characterised in that

a. the reactor container (4) is axially displaceable in the cavity (2);

b. the cavity (2) is provided at its upper side with a removable cover (13);

c. the reactor container (4) can be provided with means (32) which can be connected to a lifting apparatus (33);

d. the supply of the cooling gas into the fuel element charge (10) from the cavity (2) takes place through bores in the base plate (5) and channels (24), which form a continuation thereof, in the lateral reflector (8) and a collecting chamber (25);

e. the discharge of the heated gas from the fuel element charge (10) takes place in known manner through bores in the base (7) and at lest one opening, which can be connected to a hot gas pipeline (26, 27) in the base plate (5);

f. the connection of the base plate (5) with the hot gas pipeline (26, 27) can be released by axially moving the reactor container (4).

2. A reactor according to Claim 1, characterised in that the means which can be connected to the lifting apparatus (33) consist of traction rods (32) which run in the channels (24) in the lateral reflector (8) and which can be fastened to the base plate (5).

3. A reactor according to Claim 2, characterised in that

a. during the operation of the reactor, the channels (24) are closed by plugs (30) at their upper end;

b. the channels (24) are connected to the chamber (25) above the fuel element charge (10).

4. A reactor according to Claim 2, characterised in that during the operation of the reactor, absorber elements (11) which serve to regulate the reactor can be moved in further channels in the lateral reflector (8).

5. A reactor according to Claim 1, characterised in that the hot gas pipeline (26, 27) leads into a second cavity (15) in which heat consuming units (17) are installed.

6. A reactor according to Claim 1, characterised in that the hot gas pipeline (26, 27) leads to heat consuming units (17) which are arranged in the same cavity (2) beneath the rector container (4).

7. A reactor according to Claim 1, characterised in that guide devices (23) are provided which guide the cool gas from the cavity (2) to the base plate (5) and to the hot gas pipeline (26, 27).

## Revendications

1. Réacteur à haute température refroidi par gaz, comportant notamment une charge (10) d'éléments cvombustibles en forme de boulets, dans un caisson (15) constitué par une plaque de base métallique (5) et par une enveloppe en tôle (6) reliée à cette plaque et à l'intérieur de laquelle se trouvent disposés un fond (7), un réflecteur latéral (8) et un réflecteur sommital (9) constitués par des briques de charbon et/ou de graphite; le caisson est situé, pendant le fonctionnement, dans une caverne (2) d'une enceinte de sécurité (2), et est caractérisé par le fait que

a. le caisson (4) du réacteur est déàplaçable axialement dans la caverne (2),

b. la caverne (2) est munie, sur sa face supérieure, d'un couvercle (3) pouvant être retiré,

c. le caisson (4) du réacteur peut être équipé de moyens (32) susceptibles d'être reliés à un treuil (33),

d. l'amenée du gaz de refroidissement dans la charge (10) d'éléments combustibles s'effectue à patir de la caverne (2) par l'intermédiaire de perçages ménagés dans la plaque de base (5) et de canaux (24) prolongeant ces perçages et ménagés dans le réflecteur latéral (8), et par l'intermédiaire d'un espace de collecte (25),

e. l'évacuation du gaz chaud hors de la charge (10) d'éléments combustibles s'effectue de façon connue en soi par l'intermédiaire de perçages ménagés dans le fond (7) et par l'intermédiaire d'au moins une ouverture ménagée dans la plaque de base (5) et pouvant être reliée à une canalisation du gaz chaud (26, 27),

f. la liaison de la plaque de base (5) à la canalisation du gaz chaud (26, 27) est détachable par déplacement axial du caisson (5) du réacteur.

2. Réacteur suivant la revendication 1, caraté- risé par le fait que les moyens pouvant être reliés au treuil (33) sont constitués par des tiges de traction (32) qui peuvent s'étendre dans les canaux (24) ménagés dans le réflecteur latéral (8) et peuvent être fixés à la plaque de base (5).

3. Réacteur suivant la revendication 2, caractérisé par le fait que

a. pendant le fonctionnement du réacteur, l'extrémité supérieure des canaux (24) est obturée par des bouchons (30),

b. les canaux (24) sont reliés à l'espace (25) situé au-dessus de la charge (10) d'éléments combustibles.

4. Réacteur suivant la revendication 2, caractérisé par le fait que pendant le fonctionnement du réacteur, des éléments d'absorbeurs (11) servant au réglage du réacteur sont déplaçables dans d'autres canaux ménagés dans le réflecteur latéral (8).

5. Réacteur suivant la revendication 1, caractérisé par le fait que la canalisation du gaz chaud (26, 27) s'étend dans une seconde caverne (15), dans laquelle sont installés des appareils consommant de la chaleur (17).

6. Réacteur suivant la revendication 1, caractérisé par le fait que la canalisation du gaz chaud (26, 27) s'étend jusqu'à des appareils consommant de la chaleur (17), qui sont disposés dans la même caverne (2), au-dessous du caisson (4) du réacteur.

7. Réacteur suivant la revendication 1, caractérisé par le fait que sont prévus des dispositifs de guidage (23) servant à guider le gaz froid sortant de la caverne (2) sur la plaque de base (5) et sur la canalisation du gaz chaud (26, 27).

Fig.1

Fig.2

Fig.3